# EUROPEAN PATENT SPECIFICATION

(11) **EP 0 885 781 B1**
(45) Date of publication and mention of the grant of the patent: **10.03.2004**
(21) Application number: 98201592.7
(22) Date of filing: 14.05.1998
(51) Int. Cl.: B60R 16/02

(54) **Central wiring unit**
Zentralelektrik
Platine de servitude

(30) Priority: 20.06.1997 GB 9712911
(43) Date of publication of application: 23.12.1998
(73) Proprietor: Delphi Automotive Systems Deutschland GmbH, D-42369 Wuppertal (DE)
(72) Inventor: Koburg, Dirk, 42897 Remscheid (DE); Fischer, Harald, 42897 Remscheid (DE); Deveaux, Axel, 42349 Wuppertal (DE); Spiess, Oliver, 44534 Lunen (DE)
(74) Representative: Denton, Michael John

(56) References cited:
- EP-A- 0 584 592
- DE-A- 4 429 294
- DE-C- 3 608 752

## Description

### Technical Field

The present invention relates to a central wiring unit for a motor vehicle.

### Background of the Invention

The central wiring unit of a motor vehicle generally comprises a housing of electrically insulating material, the housing containing a number of through bores within which are positioned electrical terminals. The terminals are connected to at least a part of the wiring harness of the motor vehicle. Fuses, relays, and other electrical components are plugged into the terminals. After insertion of the terminals in the through bores, additional keying elements are required to lock each terminal in each through bore. A central wiring unit according to the preamble of claim 1 is disclosed in EP-A-0584592.

### Summary of the Invention

It is an object of the present invention to provide an improved central wiring unit.

A central wiring unit in accordance with the present invention for a motor vehicle comprises a housing of electrically insulating material and having a top wall, a bottom wall, and an open end; a drawer of electrically insulating material which is slidable into the housing through the open end thereof; first snap fitting means on the drawer and on the housing for holding the drawer inside the housing in a first position relative to the housing; second snap fitting means on the drawer and on the housing for holding the drawer inside the housing in a second position relative to the housing; through bores in the housing which open through the top wall and the bottom wall and which are alignable with corresponding through bores in the drawer; an inwardly facing lip in each through bore, the inwardly facing lips allowing insertion and removal of an electrical terminal in each corresponding through bores through the bottom wall of the housing in the first position of the drawer relative to the housing, and retaining the electrical terminal in the second position of the drawer relative to the housing; and a control unit slidable into an open ended channel in the drawer through the open end of the housing when the drawer is in the second position relative to the housing, the control unit engaging the second snap fitting means to prevent release of the second snap fitting means.

The central wiring unit of the present invention provides a retaining arrangement for the electrical terminals without the need for additional keying elements.

### Brief Description of the Drawings

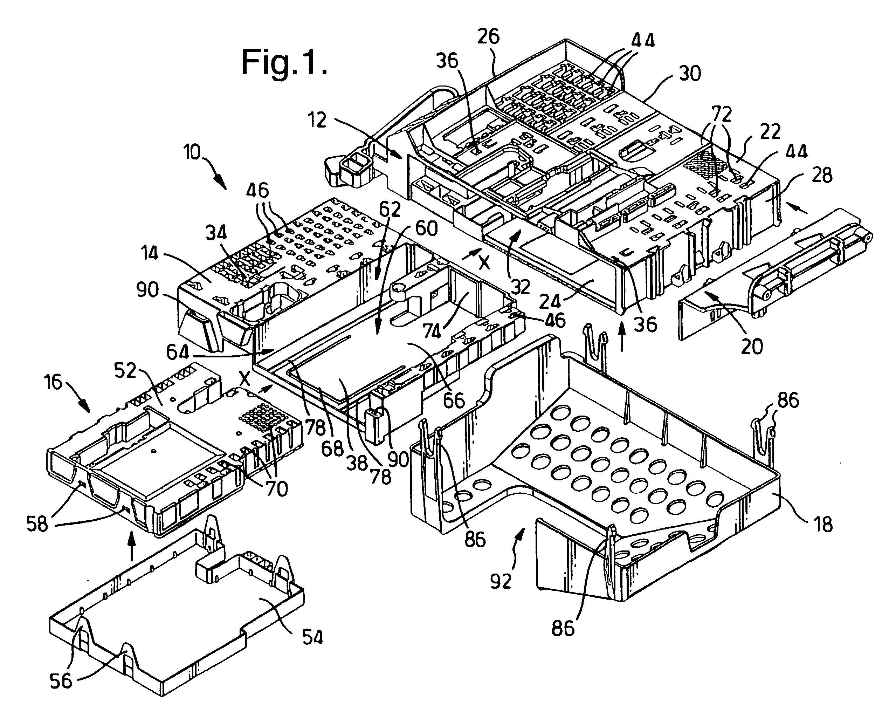

The present invention will now be described, by way of example, with reference to the accompanying drawings, in which:-
Figure 1 is an exploded view of a central wiring unit in accordance with the present invention;

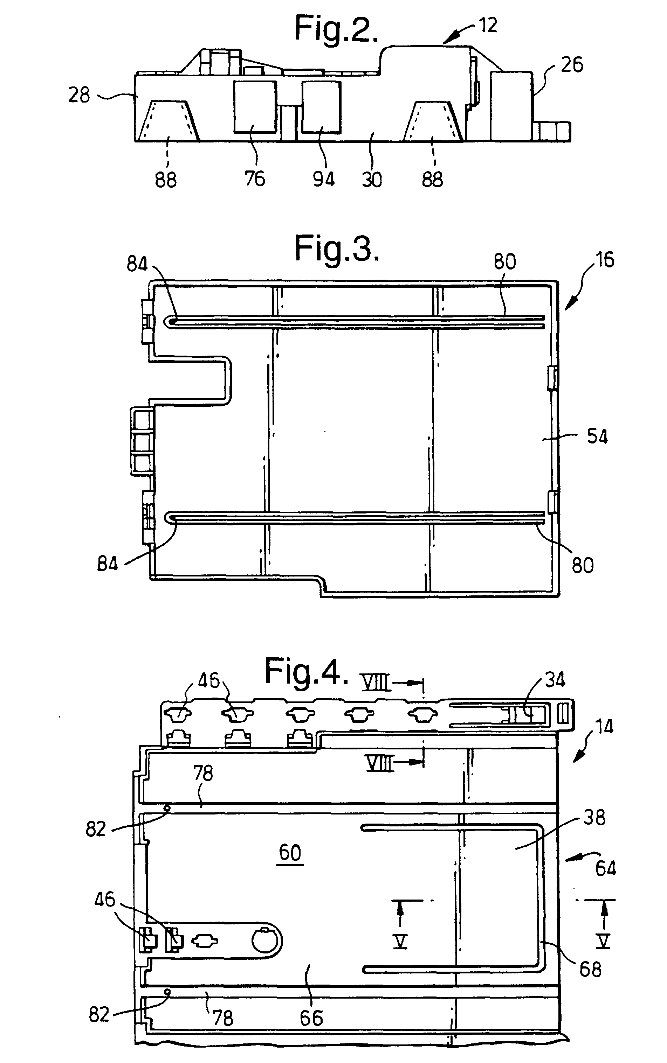

Figure 2 is an end view of one end of the housing of the central wiring unit of Figure 1;
Figure 3 is a bottom view of the control unit of the central wiring unit of Figure 1;
Figure 4 is a top view of part of the drawer of the central wiring unit of Figure 1;

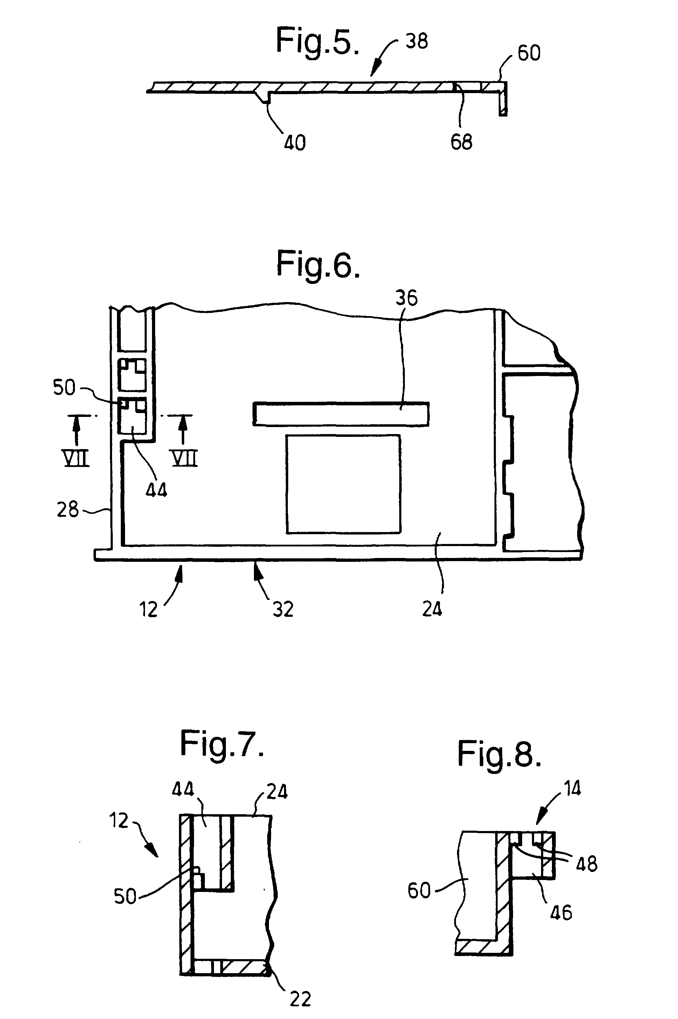

Figure 5 is a cross-sectional view on the line V-V of Figure 4;
Figure 6 is a bottom view of part of the housing of the central wiring unit of Figure 1;
Figure 7 is a cross-sectional view on the line VII-VII of Figure 6; and
Figure 8 is a cross-sectional view on the line VIII-VIII of Figure 4.

### Description of the Preferred Embodiment

Referring to the drawings, a central wiring unit 10 in accordance with the present invention comprises a housing 12, a drawer 14, and a control unit 16, and preferably a cover 18 and a hinge 20. The housing 12 is preferably moulded from electrically insulating material and comprises a top wall 22, a bottom wall 24, a first side wall 26, a second side wall 28, and an end wall 30. The other end 32 of the housing 12 is substantially open. The drawer 14, which is preferably moulded from electrically insulating material, is shaped and sized to make a sliding fit into the housing 12 through the open end 32 of the housing.

The drawer 14 has a pair of resilient tabs 34 which, on sliding the drawer into the housing 12, make a snap fit in corresponding apertures 36 in the top wall 22 of the housing, to retain the drawer in a first positioned relative to the housing. The drawer 14 also has a flexible flap 38 with an outwardly directed rib 40 which makes a snap fit in a corresponding aperture 42 in the bottom wall 24 of the housing 12, to retain the drawer in a second position relative to the housing. On sliding the drawer 14 into the housing 12 in the direction X, the drawer initially reaches the first position. Further relative movement in the direction X moves the drawer 14 from the first position to the second position. The apertures 36 are sized to allow movement of the tabs 34 whilst the drawer 14 moves from the first position to the second position relative to the housing 12. Removal of the drawer 14 from the housing 12 requires the use of a special tool (not shown) to release the resilient tabs 34 from the apertures 36, and the drawer 14 can be slid out of the housing 12 by pushing the drawer through an aperture 94 in the end wall 30 of the housing.

The housing 12 has a number of through bores 44 which open through both the top wall 22 and the bottom wall 24. The drawer 14 has corresponding through bores 46. The through bores 44,46 extend axially in a direction which is perpendicular to the direction X. When the drawer 14 is in the first position relative to the housing 12, the corresponding through bores 44,46 are slightly offset. When the drawer 14 is in the second position relative to the housing 12, the corresponding through bores 44,46 are substantially aligned. Despite the slight offset of the corresponding bores 44,46 when the drawer 14 is in the first position relative to the housing 12, electrical terminals (not shown), which are connected to the ends of electrical conductors (not shown) of a vehicle wiring harness (not shown), can be inserted into, and removed from, the corresponding through bores 44,46, through the bottom wall 24 of the housing. When the drawer 14 is in the second position relative to the housing 12, the electrical terminals are secured in the aligned through bores 44,46 and cannot be removed, as explained below. The through bores 46 in the drawer 14 have inwardly facing lips 48 at the ends of the through bores which are adjacent the top wall 22 of the housing 12. The through bores 44 in the housing 12 have inwardly facing lips 50 in the portion of the through bores opening through the bottom wall 24. In the first position of the drawer 14 relative to the housing 12, the lips 50 are offset from the through bores 46 in the drawer 14. However, in the second position of the drawer 14 relative to the housing 12, the lips 50 project across one end of the through bores 46 in the drawer 14. As a consequence, the electrical terminals in the through bores 44,46 are trapped between the pairs of lips 48,50 in the corresponding through bores 44,46. The positioning of the lips 48,50 within each corresponding through bore 44,46 is determined to provide a predetermined axial separation between the lips, each axial separation being dependent on the shape and size of the electrical terminal to be positioned within each corresponding through bore 44,46.

The control unit 16 comprises a main unit 52 and a unit cover 54. The main unit 52 houses one or more electronic control devices (not shown), such as a multitimer, and electrical terminals (not shown) associated with the control device(s) positioned in bores 70 in the main unit. The unit cover 54 has a number of flexible tabs 56 which make a snap fit on corresponding lips 58 formed on the main unit 52. The drawer 14 has a channel 60 formed therein which extends axially in the same direction as the direction X, the channel having an open top 62 and an open end 64. The open top side 62 of the channel 60 is closed by the top wall 22 of the housing 12 when the drawer 14 is positioned in the housing. The open end 64 of the channel 60 aligns with the open end 32 of the housing 12 when the drawer 14 is positioned in the housing. The flap 38 in the drawer 14 is formed in the base 66 of the channel 60. The control unit 16 slides in the direction X through the open end 64 into the channel 60. When the drawer 14 is in the first position relative to the housing 12, the rib 40 on the flap 38 engages the base 66 of the channel 60 to deflect the free end 68 of the flap into the channel to prevent the control unit 16 being slid into the channel. When the drawer 14 is in the second position relative to the housing 12, the rib 40 on the flap 38 snap fits in the aperture 42 in the bottom wall 24 of the housing and the flap lies in substantially the same plane as the base 66 of the channel to allow the control unit 16 to be slid into the channel in the direction X. When the control unit 16 has been slid into the channel 60, the control unit prevents the flap 38 from moving, and so the drawer 14 remains fixed in the housing 12 due to the rib 40 being retained in the aperture 42. Also, when the control unit 16 has been slid into the channel 60, the bores 70 in the main unit 52 align with apertures 72 in the top wall 22 of the housing 12. The control unit 16 may be slid out of the channel 60 by pushing the control unit through aligned apertures 74,76 in the drawer 14 and the end wall 30 of the housing 12, respectively.

For ease of insertion of the control unit 16 into the channel 60, the base 66 of the channel has two grooves 78 formed therein which are substantially parallel and extend in the direction X from the open end 64 of the channel. The unit cover 54 of the control unit 16 has a corresponding pair of ribs 80 which make a sliding fit in the grooves 78. Each groove 78 preferably has pimple 82 formed therein which makes a snap fit in a corresponding depression 84 in the corresponding rib 80 when the control unit 16 is fully inserted in the channel 60 in the drawer 14.

The cover 18 has resilient tangs 86, four of which make a snap fit in open ended slots 88 in the end wall 30 of the housing 12, the others making a snap fit in open ended slots 90 formed in the drawer 14 adjacent the open end 32 of the housing. The slots 88,90 extend axially in the same axial direction as the through bores 44,46 in the housing 12 and the drawer 14. The cover 18 makes a snap fit in the housing 12 and the drawer 14 when the drawer is in the first position or the second position relative to the housing to substantially cover the bottom wall 24 of the housing. When in place, the cover 18 prevents withdrawal of the drawer 14 from the housing 12. The cover has an aperture 92 through which the cable harness (not shown) can pass, and may be shaped to bend the cable harness in a required direction. The resilient tangs 86 prevent the cover 18 being pushed off by the cable harness.

The hinge 20 makes a sliding snap fit on the second side wall 28 of the housing 12. The hinge 20 provides means for mounting the central wiring unit 10 in a motor vehicle, with the central wiring unit being pivotable between a storage position and an access position for maintenance purposes.

The present invention is not restricted to the above described embodiment. For example, other suitable arrangements may be provided for the snap fit of the drawer 14 and the housing 12 in the first position and/or the snap fit in the second position, and the positioning of the snap fit in the first position may be other than that shown in the drawings.

## Claims

1. A central wiring unit (10) for a motor vehicle comprising a housing (12) of electrically insulating material and having a top wall (22), a bottom wall (24), and an open end (32); a drawer (14) of electrically insulating material which is slidable into the housing through the open end thereof; through bores (44) in the housing which open through the top wall and the bottom wall and which are alignable with corresponding through bores (46) in the drawer; **characterized in that** the central wiring unit (10) furter comprises first snap fitting means (34,36) on the drawer and on the housing for holding the drawer inside the housing in a first position relative to the housing; second snap fitting means (38,40,42) on the drawer and on the housing for holding the drawer inside the housing in a second position relative to the housing; in inwardly facing lip (48,50) in each through bore, the inwardly facing lips allowing insertion and removal of an electrical terminal in each corresponding through bores through the bottom wall of the housing in the first position of the drawer relative to the housing, and retaining the electrical terminal in the second position of the drawer relative to the housing; and a control unit (16) slidable into an open ended channel (60) in the drawer through the open end of the housing when the drawer is in the second position relative to the housing, the control unit engaging the second snap fitting means to prevent release of the second snap fitting means.

2. A central wiring unit as claimed in Claim 1, wherein the second snap fitting means (38,40,42) prevents insertion of the control unit (16) into the open ended channel (60) when the drawer (14) is in the first position relative to the housing (12).

3. A central wiring unit as claimed in Claim 1 or Claim 2, wherein the open ended channel (60) has a base (66) adjacent the bottom wall (24) of the housing (12); and wherein the second snap fitting means comprises a flexible flap (38) formed in the base of the open ended channel, and an aperture (42) in the bottom wall of the housing, the flap having an outwardly directed rib (40) which makes a snap fit in the aperture when the drawer (14) is in the second position relative to the housing.

4. A central wiring unit as claimed in any one of Claims 1 to 3, wherein the first snap fitting means comprises a resilient tab (34) formed on the drawer (14) and an aperture formed in the top wall (22) of the housing (12), the tab making a snap fit in the aperture (36) when the drawer is in the first position relative to the housing.

5. A central wiring unit as claimed in any one of Claims 1 to 4, wherein the open ended channel (60) has grooves (78) formed therein which extend in the sliding direction of the control unit (16) relative to the drawer (14) to the open end (64) of the channel; and wherein the control unit has corresponding ribs (80) which make a sliding fit in the grooves.

6. A central wiring unit as claimed in Claim 5, wherein each groove (78) has a pimple (82) which makes a snap fit in a corresponding depression (84) in the corresponding rib (80) on full insertion of the control unit (16) in the open ended channel (60).

7. A central wiring unit as claimed in any one of Claims 1 to 6, further comprising a cover (18) which makes a snap fit with the drawer (14) and the housing (12) when the drawer is in the first position or the second position relative to the housing, the cover substantially covering the bottom wall (24) of the housing.

8. A central wiring unit as claimed in Claim 7, wherein the cover (18) has resilient tangs (86) which make a snap fit in corresponding slots (88,90) in the drawer (14) and the housing (12).

9. A central wiring unit as claimed in any one of Claims 1 to 8, further comprising a hinge (20) which makes a snap fit on a side wall (28) of the housing (12).

## Patentansprüche

1. Zentrale Verdrahtungseinheit (10) für ein Kraftfahrzeug, umfassend ein Gehäuse (12) aus einem elektrisch isolierendem Material und mit einer oberen Wand (22), einer unteren Wand (24) und einem offenen Ende (32); eine Lade (14) aus elektrisch isolierendem Material, welche durch Bohrungen (44) in dem Gehäuse, die sich durch die obere Wand und die untere Wand öffnen und die mit entsprechenden Durchbohrungen (46) in der Lade ausgerichtet werden können, durch das offene Ende des Gehäuses in dieses hinein geschoben werden kann,
**dadurch gekennzeichnet, dass**
die zentrale Verdrahtungseinheit (10) des Weiteren umfasst: ein erstes Schnappverschlussmittel (34, 36) an der Lade und an dem Gehäuse, um die Lade in dem Gehäuse in einer ersten Stellung in Bezug auf das Gehäuse zu halten; ein zweites Schnappverschlussmittel (38, 40, 42) an der Lade und an dem Gehäuse, um die Lade in dem Gehäuse in einer zweiten Stellung in Bezug auf das Gehäuse zu halten; einen nach innen weisenden Ansatz (48, 50) in jeder Durchbohrung, wobei die nach innen weisenden Ansätze das Einsetzen und Entfernen eines elektrischen Anschlusses in jede(r) der entsprechenden Durchbohrungen durch die untere Wand des Gehäuses in der ersten Stellung der Lade in Bezug auf das Gehäuse erlauben und den elektrischen Anschluss in der zweiten Stellung der Lade in Bezug auf das Gehäuse festhalten; und eine Steuereinheit (16), welche durch das offene Ende des Gehäuses in einen in der Lade befindlichen Kanal (60) mit offenem Ende hinein geschoben werden kann, wenn die Lade sich in der zweiten Stellung in Bezug auf das Gehäuse befindet, wobei die Steuereinheit in das zweite Schnappverschlussmittel eingreift, um das Lösen des zweiten Schnappverschlussmittels zu verhindern.

2. Zentrale Verdrahtungseinheit nach Anspruch 1, wobei das zweite Schnappverschlussmittel (38, 40, 42) das Einsetzen der Steuereinheit (16) in den Kanal (60) mit offenem Ende verhindert, wenn die Lade (14) sich in der ersten Stellung in Bezug auf das Gehäuse (12) befindet.

3. Zentrale Verdrahtungseinheit nach Anspruch 1 oder 2, wobei der Kanal (60) mit offenem Ende einen Boden (66) neben der unteren Wand (24) von dem Gehäuse (12) aufweist; und wobei das zweite Schnappverschlussmittel eine biegsame Klappe (38), welche in dem Boden des Kanals mit offenem Ende ausgebildet ist, und eine Öffnung (42) in der unteren Wand von dem Gehäuse umfasst, wobei die Klappe eine nach außen gerichtete Rippe (40) aufweist, welche einen Schnappverschluss in der Öffnung bildet, wenn die Lade (14) sich in der zweiten Stellung in Bezug auf das Gehäuse befindet.

4. Zentrale Verdrahtungseinheit nach einem der Ansprüche 1 bis 3, wobei das erste Schnappverschlussmittel eine an der Lade (14) ausgebildete elastische Lasche (34) und eine in der oberen Wand (22) von dem Gehäuse (12) ausgebildete Öffnung umfasst, wobei die Lasche einen Schnappverschluss in der Öffnung (36) bildet, wenn die Lade sich in der ersten Stellung in Bezug auf das Gehäuse befindet.

5. Zentrale Verdrahtungseinheit nach einem der Ansprüche 1 bis 4, wobei der Kanal (60) mit offenem Ende darin ausgebildete Nuten (78) aufweist, welche sich in der Verschieberichtung der Steuereinheit (16) in Bezug auf die Lade (14) zu dem offenen Ende (64) des Kanals erstrecken; und wobei die Steuereinheit entsprechende Rippen (80) besitzt, welche einen Gleitsitz in den Nuten bilden.

6. Zentrale Verdrahtungseinheit nach Anspruch 5, wobei jede Nut (78) eine Warze (82) aufweist, welche beim vollständigen Einsetzen der Steuereinheit (16) in den Kanal (60) mit offenem Ende einen Schnappverschluss in einer entsprechenden Vertiefung (84) in der entsprechenden Rippe (80) bildet.

7. Zentrale Verdrahtungseinheit nach einem der Ansprüche 1 bis 6, des Weiteren umfassend eine Abdeckung (18), welche einen Schnappverschluss mit der Lade (14) und dem Gehäuse (12) bildet, wenn die Lade sich in der ersten Stellung oder der zweiten Stellung in Bezug auf das Gehäuse befindet, wobei die Abdeckung im Wesentlichen die untere Wand (24) von dem Gehäuse abdeckt.

8. Zentrale Verdrahtungseinheit nach Anspruch 7, wobei die Abdeckung (18) elastische Dorne (86) aufweist, welche einen Schnappverschluss in entsprechenden Schlitzen (88, 90) in der Lade (14) und dem Gehäuse (12) bilden.

9. Zentrale Verdrahtungseinheit nach einem der Ansprüche 1 bis 8, des Weiteren umfassend ein Scharnier (20), welches einen Schnappverschluss an einer Seitenwand (28) von dem Gehäuse (12) bildet.

## Revendications

1. Unité centrale de câblage (10) pour véhicule à moteur, comprenant un boîtier (12) en un matériau électriquement isolant et présentant une paroi de sommet (22), une paroi de fond (24) et une extrémité ouverte (32) ; un tiroir (14) en un matériau électriquement isolant qui peut coulisser dans le boîtier à travers l'extrémité ouverte de celui-ci par des alésages (44) dans le boîtier, qui débouchent à travers la paroi de sommet et la paroi de fond et qui peuvent être alignés avec des alésages traversants correspondants (46) dans le tiroir ; **caractérisée en ce que** l'unité centrale de câblage (10) comporte de plus des premiers moyens d'assemblage par encliquetage (34, 36) sur le tiroir et sur le boîtier pour maintenir le tiroir à l'intérieur du boîtier dans une première position relativement au boîtier ; des seconds moyens d'assemblage par encliquetage (38, 40, 42) sur le tiroir et sur le boîtier pour maintenir le tiroir à l'intérieur du boîtier dans une seconde position relativement au boîtier ; et une lèvre (48,50) tournée vers l'intérieur dans chaque alésage traversant, les lèvres tournées vers l'intérieur autorisant l'insertion et l'enlèvement d'une borne électrique dans l'alésage traversant correspondant à travers la paroi de fond du boîtier dans la première position du tiroir par rapport au boîtier, et retenant la borne électrique dans la seconde position du tiroir par rapport au boîtier ; et une unité de commande (16) pouvant coulisser dans un canal (60) à extrémité ouverte dans le tiroir à travers l'extrémité ouverte du boîtier lorsque le tiroir est dans la seconde position relativement au boîtier, l'unité de commande coopérant avec les seconds moyens d'assemblage par encliquetage pour empêcher une libération des seconds moyens d'assemblage par encliquetage.

2. Unité centrale de câblage selon la revendication 1, dans laquelle les seconds moyens d'assemblage par encliquetage (38, 40, 42) empêchent l'insertion de l'unité de commande (16) dans le canal (60) à extrémité ouverte, lorsque le tiroir (14) est dans la première position par rapport au boîtier (12).

3. Unité centrale de câblage selon la revendication 1 ou 2, dans laquelle le canal (60) à extrémité ouverte présente une base (66) adjacente à la paroi de fond (24) du boîtier (12) ; et dans laquelle les seconds moyens d'assemblage par encliquetage comprennent un volet flexible (38) formé dans la base du canal à extrémité ouverte, et une ouverture (42) dans la paroi de fond du boîtier, le volet étant pourvu d'une nervure (40) dirigée vers l'extérieur qui assure un assemblage par encliquetage dans l'ouverture lorsque le tiroir (14) est dans la seconde position par rapport au boîtier.

4. Unité centrale de câblage selon l'une quelconque des revendications 1 à 3, dans laquelle les premiers moyens d'assemblage par encliquetage comprennent une patte élastique (34) formée sur le tiroir (14) et une ouverture formée dans la paroi de sommet (22) du boîtier (12), la patte réalisant un assemblage par encliquetage dans l'ouverture (36) lorsque le tiroir est dans la première position relativement au boîtier.

5. Unité centrale de câblage selon l'une quelconque des revendications 1 à 4, dans laquelle le canal (60) à extrémité ouverte présente des rainures (78) qui y sont formées et qui s'étendent dans la direction de coulissement de l'unité de commande (16) relativement au tiroir (14) jusqu'à l'extrémité ouverte (64) du canal ; et dans laquelle l'unité de commande comporte des nervures correspondantes (80) qui réalisent un assemblage glissant dans les rainures.

6. Unité centrale de câblage selon la revendication 5, dans laquelle chaque rainure (78) comporte un bouton (82) qui assure un assemblage par encliquetage dans une dépression correspondante (84) dans la nervure correspondante (80), lors d'une insertion complète de l'unité de commande (16) dans le canal (60) à extrémité ouverte

7. Unité centrale de câblage selon l'une quelconque des revendications 1 à 6, comprenant un couvercle (18) qui assure un assemblage par encliquetage avec le tiroir (14) et le boîtier (12) quand le tiroir est dans la première position ou dans la seconde position relativement au boîtier, le couvercle recouvrant sensiblement la paroi de fond (24) du boîtier.

8. Unité centrale de câblage selon la revendication 7, dans laquelle le couvercle (18) est pourvu de pattes élastiques (86) qui réalisent un assemblage par encliquetage dans des fentes correspondantes (88, 90) dans le tiroir (14) et dans le boîtier (12).

9. Unité centrale de câblage selon l'une quelconque des revendications 1 à 8, comportant de plus une charnière (20) qui assure un assemblage par emboîtement sur une paroi latérale (28) sdu boîtier (12).
